# FASCICULE DE BREVET EUROPEEN

(11) **EP 1 748 251 B1**
(45) Date de publication et mention de la délivrance du brevet: **07.05.2014**
(21) Numéro de dépôt: 06291191.2
(22) Date de dépôt: 21.07.2006
(51) Int. Cl.: F21S 8/10, B60Q 1/08, B60Q 1/12

(54) **Dispositif d'éclairage pour véhicule automobile**
Beleuchtungsvorrichtung für Kraftfahrzeuge
Lighting assembly for vehicles

(30) Priorité: 26.07.2005 FR 0507985
(43) Date de publication de la demande: 31.01.2007
(73) Titulaire: VALEO VISION, 93012 Bobigny Cedex (FR)
(72) Inventeur: Albou, Pierre, 75013 Paris (FR); Puente, Jean-Claude, 93190 Livry Gargan (FR); Reiss, Benoît, 95600 Eaubonne (FR); Germon, Francois, 49250 Fontaine Guerin (FR)

(56) Documents cités:
- EP-A- 1 466 782
- EP-A- 1 526 328
- EP-A- 1 564 481
- DE-A1- 10 205 779
- DE-A1- 19 718 335
- DE-A1- 19 813 032
- FR-A1- 2 903 946
- GB-A- 2 184 222
- JP-A- 2007 317 604
- US-A1- 2001 028 565
- US-A1- 2002 067 618

## Description

L'invention concerne un dispositif d'éclairage et/ou de signalisation pour véhicule automobile, qui sera désigné par la suite pour plus de concision sous le nom de projecteur. L'invention s'intéresse plus particulièrement aux projecteurs équipés de modules optiques aptes à émettre plusieurs faisceaux lumineux de caractéristiques, de photométries, différentes.

Différents types de faisceaux lumineux sont effectivement prévus et définis de façon réglementaire. Certains sont obligatoires, comme les faisceaux de type route et les faisceaux de type code ou croisement. D'autres ne sont pas à ce jour obligatoires mais peuvent apporter au conducteur un confort de vision supplémentaire, comme les faisceaux de type anti brouillard, ou les faisceaux de vue diurne.

On rappelle brièvement les caractéristiques des faisceaux les plus courants :
- des feux de position, d'intensité et de portée faible ; qui réalisent une fonction de signalisation,
- des faisceaux de croisement, ou codes, d'intensité plus forte et de portée sur la route avoisinant 70 mètres, qui sont utilisés essentiellement la nuit et dont la répartition du faisceau lumineux, à coupure généralement en forme de V, est telle qu'elle permet de ne pas éblouir le conducteur d'un véhicule croisé ;
- des faisceaux de route longue portée, et des feux de complément de type longue portée, dont la zone de vision sur la route avoisine 200 mètres, et qui doivent être éteints lorsque l'on croise un autre véhicule afin de ne pas éblouir son conducteur ; ce sont des faisceaux sans coupure,
- des faisceaux anti-brouillard, qui présentent une coupure de type plate.

D'autres faisceaux ont été plus récemment réglementés, regroupés sous le nom d'AFS (l'abréviation pour « Advanced Frontlighting System » en anglais). Il s'agit par exemple :
- de la fonction dite Town Light en anglais, pour feu de ville. Cette fonction assure l'élargissement d'un faisceau de type feu de croisement tout en diminuant légèrement sa portée ;
- de la fonction dite Motorway Light en anglais, pour feu d'autoroute. Cette fonction assure une augmentation de la portée d'un feu de croisement ;
- de la fonction dite Overhead Light en anglais, pour feu surélevé. Cette fonction assure une modification d'un faisceau de feu de croisement de telle sorte que des portiques situés en hauteur sont éclairés de façon satisfaisante au moyen des feux de croisement ;
- une fonction dite AWL (Adverse Weather Light en anglais, pour feu de mauvais temps). Cette fonction assure une modification d'un faisceau de feu de croisement de telle sorte que le conducteur n'est pas ébloui par un reflet de son propre projecteur et que les performances en portée et visibilité à droite soient améliorées.

Concernant plus spécifiquement les faisceaux code ou croisement, il y a une demande constante de la part des constructeurs automobile pour que les véhicules puissent aisément passer d'un fonctionnement de projecteur dit « en trafic à droite » à un fonctionnement de projecteur dit « en trafic à gauche ». En effet, en Grande Bretagne par exemple, la coupure du faisceau de croisement est inversée par rapport à celle prévue en France ou en Allemagne, la conduite ne faisant pas du même côté. Cette demande révèle aussi bien une volonté de standardiser le plus possible les véhicules, quelque soit le marché auquel ils sont destinés, qu'une volonté d'offrir au conducteur la possibilité de faire passer son véhicule d'un fonctionnement à un autre, le temps d'un voyage par exemple.

Des solutions ont déjà été proposées pour qu'un module optique, de type elliptique par exemple, soit apte à passer d'un mode « trafic à droite » à un mode « trafic à gauche », en ayant recours à des écrans d'occultation devant la source lumineuse et créant la coupure qui sont montés de façon mobile : en passant d'une position à une autre, ils peuvent définir deux coupures différentes, inversées l'une par rapport à l'autre, éventuellement en combinaison avec un autre cache fixe ou mobile. C'est par exemple le cas des projecteurs décrits dans les brevets EP 723 108, FR 2 769 071 ou EP 1 106 911.

Ces solutions présentent cependant l'inconvénient d'intégrer dans des projecteurs une pièce mobile de plus, avec son actionneur, augmentant donc la complexité du projecteur et, de fait, augmentant les risques d'usure ou de mal fonctionnement.

La présente invention a alors pour but de remédier à cela, en proposant notamment des projecteurs avec des modules optiques permettant l'émission de faisceaux de coupures différentes de façon plus simple, plus sûre, notamment sans requérir de pièces mobiles.

La présente invention a tout d'abord pour objet un dispositif d'éclairage pour véhicule automobile comportant une pluralité de modules optiques comportant chacun au moins une source lumineuse, ledit dispositif étant apte à émettre au moins deux faisceaux à coupures différentes, ledit dispositif comprenant :
- un premier module optique apte à générer un premier faisceau à coupure sensiblement plate,
- un second module optique apte à générer un second faisceau à coupure au moins partiellement oblique,
- un troisième module optique apte à générer un troisième faisceau à coupure au moins sensiblement oblique et différente de la coupure du second faisceau,
au moins un des faisceaux globaux émis par ledit dispositif d'éclairage étant la superposition d'au moins deux desdits faisceaux émis par les modules optiques.

On comprend par module optique un système optique comprenant au moins une source lumineuse éventuellement disposée dans un réflecteur, par exemple une ou plusieurs diodes électroluminescentes regroupées, ou une lampe halogène ou xénon dans un réflecteur, et qui soit de préférence autonome, c'est-à-dire qui soit apte à être allumé ou éteint séparément des autres modules du projecteur.

Selon l'invention, le second faisceau à coupure est sensiblement symétrique au troisième faisceau à coupure, notamment par rapport à un axe sensiblement vertical. Un faisceau global peut alors être obtenu en superposant les premier et second faisceaux, respectivement des premier et troisième faisceaux, afin de constituer un faisceau de croisement pour trafic à droite, respectivement un faisceau de croisement pour trafic à gauche. En allumant ainsi deux modules sur trois de façon différenciée, on obtient les deux types de faisceau de croisement de façon très simple.

Plutôt que d'utiliser un unique module optique avec un écran d'occultation mobile devant la source de lumière, on fait donc ici le choix de décomposer le faisceau émis en une pluralité de « sous faisceaux » émis par une pluralité de modules associés. On peut alors composer le faisceau global approprié par combinaison de certains de ces sous faisceaux : on remplace le mouvement d'une pièce mobile par l'allumage ou non de la source lumineuse de chacun des modules.

On peut obtenir, en allumant de façon alternée chacun des modules à coupure oblique, une coupure de type croisement trafic à droite et une coupure de type croisement trafic à gauche.

L'un des faisceaux globaux émis par ledit dispositif d'éclairage peut être la superposition des trois faisceaux au moins émis par les premier, second et troisième modules optiques. Dans cette configuration, tous les modules sont allumés en même temps.

Le projecteur peut également comprendre un quatrième module optique apte à générer un quatrième faisceau, de préférence central, participant à l'obtention d'un des faisceaux globaux émis par ledit dispositif. On comprend par central le fait que ce quatrième faisceau émet de préférence dans une zone centrale par rapport aux autres faisceaux. Ce faisceau est notamment utile quand on veut obtenir un faisceau global de type route, nécessitant un apport de lumière significatif au centre.

Le pilotage de l'allumage du second ou du troisième module peut être fait manuellement, à l'aide d'un bouton sur le tableau de bord accessible au conducteur ou, pour un réglage sur la ligne de production du véhicule ou dans un garage, à l'aide d'un bouton dissimulé sur le projecteur, ou par la programmation convenable et non volatile des calculateurs de contrôle, par exemple par une commande convenable émise sur un des bus reliés au projecteur (et notamment éventuellement spécifique à la première execution du logiciel. Le pilotage peut aussi se faire de façon automatisée, par exemple à l'aide d'un système de repérage de type GPS (abréviation pour le terme anglais Global Positioning System).

Selon une autre configuration de fonctionnement, le projecteur peut émettre un faisceau global résultant de la superposition des premier, second, troisième et quatrième faisceaux, afin de constituer un faisceau de type faisceau de route. Même si chacun des « sous faisceaux » émis par chacun des modules n'est pas en soi nécessairement un faisceau respectant une photométrie réglementaire, la somme de ceux-ci forme un faisceau route parfaitement conforme.

Selon un mode de réalisation particulier, l'un des modules optiques au moins a une orientation de faisceau réglable par rapport aux autres selon au moins un axe, notamment par mouvement du module ou d'au moins un de ses composants. Une telle configuration offre notamment la possibilité d'utiliser aussi ces modules pour d'autres faisceaux que des code ou des route, notamment pour les faisceaux de type motorway, en permettant de « remonter » la coupure plate du faisceau émis par le premier module notamment.

L'invention a également pour objet un ensemble de dispositifs d'éclairage destiné à équiper la face avant d'un véhicule et comprenant un premier dispositif d'éclairage et un second dispositif d'éclairage, ledit ensemble étant apte à émettre au moins un faisceau lumineux global résultant de la superposition des faisceaux lumineux émis par chacun des dispositifs d'éclairage, avec
- le premier et le second dispositifs d'éclairage qui comprennent chacun:
   - un premier module optique apte à générer un premier faisceau à coupure sensiblement plate,
- le premier dispositif d'éclairage qui comprend :
   - un second module optique apte à générer un second faisceau à coupure au moins partiellement oblique
   - le second dispositif d'éclairage qui comprend :
      - un troisième module optique optionnel apte à générer un troisième faisceau à coupure au moins sensiblement oblique et différente de la coupure du second faisceau,
au moins un des faisceaux globaux émis par ledit ensemble étant la superposition d'au moins deux faisceaux émis par au moins deux des modules optiques.

Dans cette réalisation, et dans la continuité de la réalisation précédente, on continue à obtenir des faisceaux qui sont la superposition de sous faisceaux émis par des modules pouvant être allumés ou éteints séparément, mais on distribue ces modules de façon non identique dans chacun des projecteurs. On spécialise ainsi chaque projecteur, l'un pouvant avoir le module apte à générer une coupure oblique nécessaire à un code trafic à droite et l'autre pouvant avoir le module apte à générer la coupure oblique inverse nécessaire à un code trafic à gauche. On peut donc avoir un allumage différent des modules des projecteurs côté droit et côté gauche, un nombre de modules allumés différents d'un projecteur à l'autre en code par exemple.

Ainsi, avantageusement, le second faisceau à coupure est de préférence sensiblement symétrique au troisième faisceau à coupure, notamment par rapport à un axe sensiblement vertical.

Avantageusement donc, au moins un des faisceaux globaux (Fg) émis par ledit ensemble est la superposition d'au moins trois desdits faisceaux émis par au moins deux des modules optiques, de préférence la superposition des faisceaux à coupures sensiblement plates (F1, F1') et de l'un des faisceaux à coupure, afin de constituer respectivement un faisceau de croisement de trafic à droite ou un faisceau de croisement de trafic à gauche.

Le premier et/ou le second dispositifs d'éclairage comprennent avantageusement un quatrième module optique apte à générer un quatrième faisceau central participant à l'obtention d'un des faisceaux globaux émis par ledit ensemble. De préférence, ce quatrième module est présent dans chacun des projecteurs.

On privilégie des projecteurs conçus de façon à ce que, même s'ils ne contiennent pas exactement les mêmes modules, ils conservent néanmoins un aspect éteint identique ou proche, pour des raisons esthétiques. On peut donc munir chacun des projecteurs des mêmes modules qui génèrent des faisceaux sans coupure oblique, aussi bien pour des raisons de performances optiques que d'aspect, et de ne « dissymétriser » ceux-ci que pour les modules participant à l'obtention de coupures obliques, dissymétrie que l'on rend pas ou aussi peu que possible discernable à l'oeil à l'état éteint.

Qu'il s'agisse de projecteurs droits et gauche équipés des mêmes modules ou de modules, au moins pour certains, différenciés, les modules optiques envisagés peuvent comporter une diode électroluminescente ou une pluralité de diodes électroluminescentes. Ils peuvent aussi être plus conventionnels, et comporter une ou plusieurs lampe(s) disposée(s) dans un réflecteur. Les lampes sont de type halogène ou de type xénon par exemple. On peut utiliser des modules de type elliptique, avec un miroir elliptique associé à une lampe devant laquelle est placé, de façon connue, une lentille de Fresnel.

On peut équiper au moins un des modules optiques d'un écran d'occultation, mobile ou fixe, placé devant la ou les sources lumineuses. Un cache fixe permet de définir, de façon connue, une coupure. Un cache mobile nécessite de prévoir un mécanisme pour le déplacer d'une position à une autre, mais il présente l'avantage de pouvoir utiliser le même module pour générer au moins deux faisceaux différents (par exemple sans coupure et avec coupure, par exemple plate, et/ou selon deux coupures différentes).

De préférence, le premier module optique est apte à générer plusieurs faisceaux à coupure sensiblement plate à des hauteurs différentes. La hauteur du faisceau émis par le premier module optique peut être réglable. L'intérêt est notamment de pouvoir obtenir avec le même module un sous faisceau au sens de l'invention qui puisse participer à l'obtention à la fois d'un faisceau de photométrie de type anti-brouillard ou « townlight », et de type « motorway ». Ce premier module optique peut émettre l'un ou l'autre des faisceaux par mouvement de tout ou partie dudit module.

Optionnellement, l'orientation des faisceaux émis par le second et/ou le troisième module optique est également réglable, notamment selon un axe horizontal. Déplacer ainsi vers la gauche ou vers la droite le sous faisceau émis par le module présente notamment un intérêt si on veut l'utiliser à la fois pour participer à l'obtention d'un faisceau de type code et à l'obtention d'un faisceau de type « motorway ».

L'invention a également pour objet le véhicule muni de tels projecteurs ou ensemble de projecteurs.

L'invention sera détaillée ci-après avec des exemples non limitatifs, à l'aide des figures suivantes :
**fig. 1** **:** une représentation schématique d'un diagramme représentant la distribution du flux lumineux à coupure plate émis par un premier module optique d'un projecteur selon l'invention.
**fig. 2a,2b** **:** une représentation schématique d'un diagramme représentant la distribution du flux lumineux avec deux coupures obliques émis par respectivement un deuxième et un troisième modules optiques du projecteur selon l'invention.
**fig. 3** **:**une représentation schématique d'un diagramme représentant la distribution du flux lumineux complet de type code émis par un projecteur selon l'invention
**fig. 4** **:**une représentation schématique d'un diagramme représentant la distribution du flux lumineux d'un quatrième module
**fig.5** **:**une représentation schématique d'un diagramme représentant la distribution du flux lumineux complet de type route émis par un projecteur selon l'invention

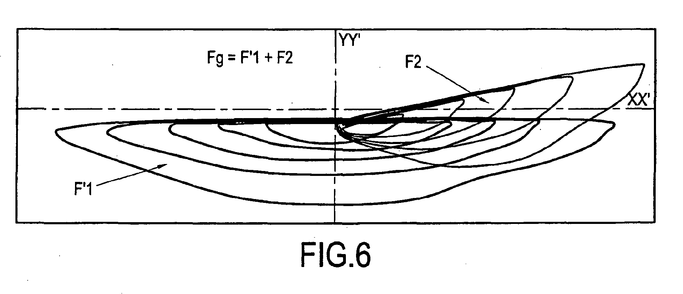

**fig.6** **:** une représentation schématique d'un diagramme représentant la distribution du flux lumineux complet de type « motorway » émis par un projecteur selon l'invention
**fig.7** **:** une représentation schématique d'un projecteur à modules selon l'invention.
**fig.8** **:** une représentation schématique d'une paire de projecteurs à modules différenciés selon l'invention.

Les figures sont très schématiques, et ne respectent pas l'échelle pour plus de clarté.

Avant de décrire des projecteurs selon l'invention et la façon dont les modules optiques sont répartis, seront d'abord décrits les différents « sous faisceaux » et faisceaux complets obtenus grâce auxdits modules optiques.

⇐ Selon une première configuration de projecteurs, il est recherché l'obtention d'un faisceau « global » qui soit de type croisement (appelé aussi code) de type trafic à droite et trafic à gauche. On comprend par « faisceau global » le faisceau complet issu de la superposition d'au moins deux sous faisceaux émis respectivement par au moins deux modules optiques. Le terme de module optique a été défini plus haut.

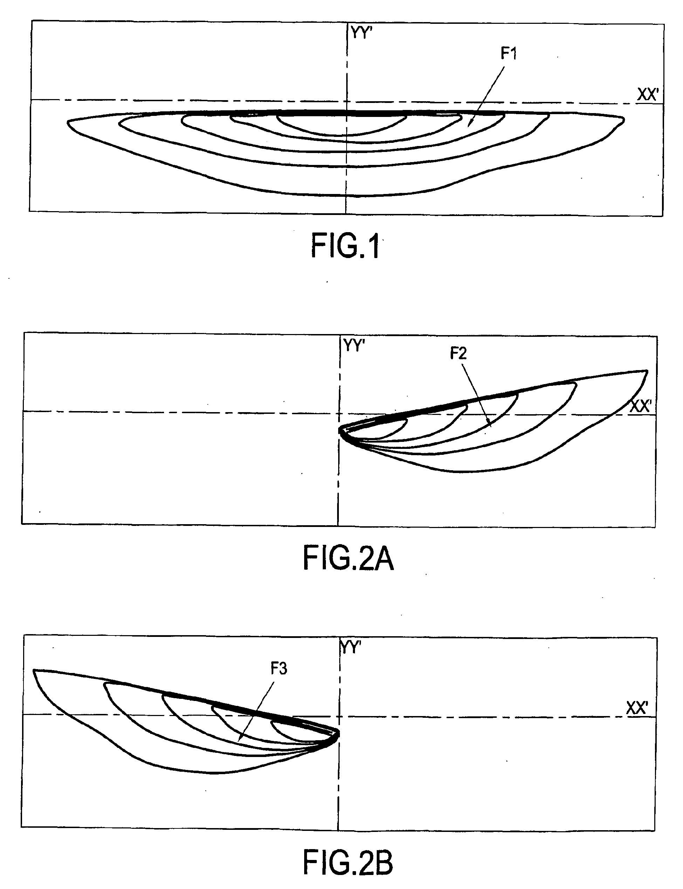

Pour cela, on utilise 3 modules optiques :
> un premier module M1 pour faire une coupure plate et obtenir ainsi un « sous faisceau » dont la distribution est représentée en figure 1 (en prenant les convention habituelles de représentation d'isolux dans un référentiel à deux axes orthonormés délimitant quatre quadrants). On voit que ce faisceau a une répartition sensiblement symétrique de part et d'autre de l'axe vertical. A noter que ce faisceau peut également être utilisé seul pour faire un faisceau complet correspondant à une photométrie de type faisceau anti-brouillard ou « townlight ».
> un second module M2 pour créer une coupure oblique nécessaire à un code trafic à droite, et un troisième module M3 pour créer une coupure oblique similaire mais inversée par rapport à un axe vertical YY', nécessaire pour un code trafic à droite : la distribution de ces deux « sous faisceaux » est représentée respectivement aux figures 2a et 2b. Ils se présentent sous une forme rappelant celle d'une aile de papillon, dont le coin interne se trouve au voisinage de l'axe vertical dans le quadrant inférieur droit, et dont le coin externe se trouve dans le quadrant droit supérieur dans le cas de la figure 2a. (et inversement dans le cas de la figure 2b)

La distribution peut être différente, et présenter notamment une partie supplémentaire s'étendant dans le quadrant inférieur gauche dans le cas de la figure 2a, toujours en dessous de l'axe horizontal, et symétriquement dans le cas de la figure 2b.

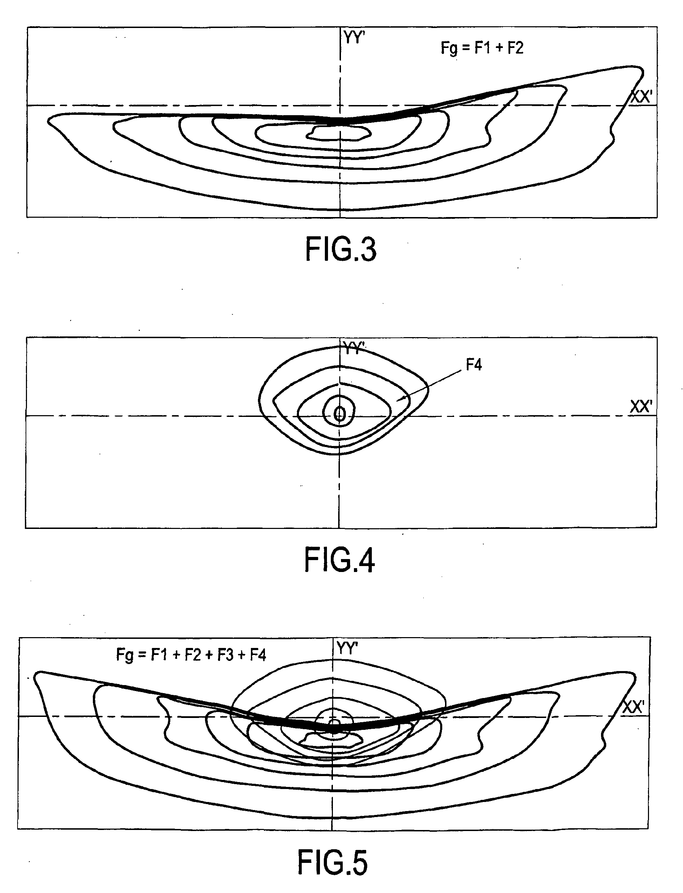

La figure 3 est la superposition des faisceaux selon les figures 1 et 2b : en allumant simultanément les modules M1 et M2, on obtient un faisceau de type code trafic à droite conforme aux réglementations européennes en vigueur. Bien sûr, avec les modifications appropriées, on peut, de façon similaire, obtenir un code conforme aux réglementations américaines et japonaises. On comprend que l'on peut obtenir un code trafic à gauche en allumant simultanément les modules M1 et M3 cette fois : on obtient alors un faisceau similaire au faisceau de la figure 3, mais inversé par rapport à l'axe vertical. On comprend aussi que l'on peut choisir d'utiliser 2 projecteurs pour chacun des côtés du véhicule, chacun comprenant les modules M1,M2 et M3, et qu'une autre solution consiste à équiper l'un des projecteurs de modules M1,M2 et l'autre projecteur de modules M1 et M3 (tout particulièrement dans le cas où l'aspect des modules M2 et M3 n'est pas significativement différent à l'état éteint).
⇐ Selon une seconde configuration de projecteurs, il est recherché l'obtention d'un faisceau « global » qui soit de type route. On utilise alors un quatrième module optique M4, capable d'émettre un faisceau de distribution sensiblement centré de part et d'autre de l'axe vertical, et dont la plus grande partie se trouve au dessus de l'axe horizontal, comme représenté en figure 4. On obtient alors un faisceau global de type route en allumant simultanément tous les modules M1,M2,M3 et M4, comme représenté en figure 5. Le faisceau émis par le module M4 est utile, car il permet d'augmenter le flux lumineux au centre, si cela est nécessaire, de façon à ce que le faisceau route passe les réglementations, européennes notamment. On peut ajouter un module de type M4 dans l'un des projecteurs seulement, ou dans chacun des projecteurs de la paire équipant un véhicule, suivant notamment des critères de performances et/ou d'aspect à l'état éteint.
⇐ Selon une troisième configuration de projecteurs, il est recherché l'obtention d'un faisceau « global » qui soit de type « motorway ». On choisit alors une configuration proche de celle choisie pour obtenir un faisceau de code, mais avec un module M1' : soit il s'agit d'un nouveau module, apte à émettre un faisceau à coupure plate de distribution similaire au faisceau F1, mais disposé plus haut par rapport à l'axe YY', soit on utilise à nouveau le module M1, mais on le choisit capable d'orienter plus haut son faisceau, par exemple en le montant mobile par rapport à un axe horizontal donné (mouvement de rotation ou de basculement). Pour compléter le faisceau et obtenir un faisceau de type motorway, on superpose au faisceau F1' le faisceau F2 du module M2 précédent. Il est également possible, pour améliorer les performances du faisceau de type motorway, de tourner un peu le faisceau F2 dans un plan horizontal, notamment de quelques degrés vrs la gauche (dans le cas d'une coupure oblique de type trafic à droite). Dans ce cas, on peut concevoir le module M2 de façon à ce qu'on puisse le faire tourner légèrement dans un plan horizontal, d'une position de type code à une position de type motorway.

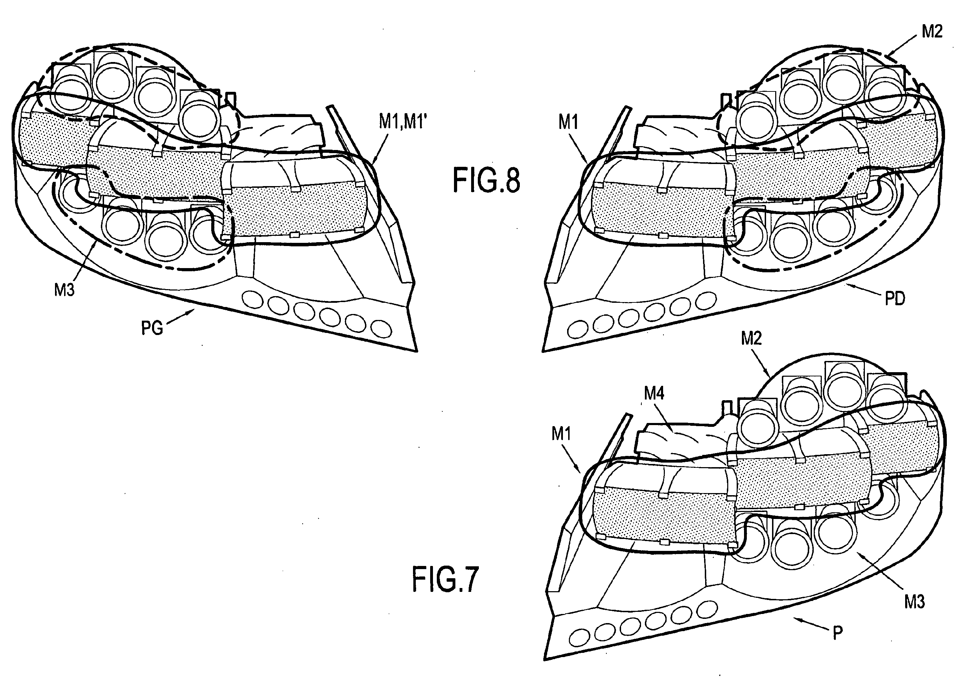

Sont maintenant décrits en détails les différents modules utilisés et la façon de les agencer dans les projecteurs, à l'aide des figures 7 et 8.
> le module M1 apte à faire une coupure plate peut être :
   - un module elliptique utilisé de façon connue pour émettre un faisceau de type antibrouillard, avec un réflecteur, une source de type halogène ou xénon, un cache adapté et une lentille de Fresnel,
   - un module composé d'un réflecteur, d'une plaque réfléchissante et d'une ou plusieurs diodes, notamment selon l'enseignement du brevet FR04 06 946 déposé le 24 juin 2004 en France
> les modules M2 et M3 peuvent comporter une lampe halogène ou xénon associée à un réflecteur à surface complexe, dont la géométrie est, de façon connue, calculée pour émettre un faisceau à coupure sans cache d'occultation ; ils peuvent également être de type eliptique avec ou sans mirroir de repliement et utiliser des diodes électroluminescentes (dont l'abréviation anglaise est LED).
> le module M4 peut être réalisé de la même manière que les modules M2 et M3 ou utiliser des LEDs dans des réflecteurs spécifiques, notamment selon l'enseignement du brevet EP 1 564 481.

La figure 7 concerne un projecteur destiné à avoir le même nombre et le même type de modules qu'il s'agisse du projecteur droit ou du projecteur gauche. Cette figure, comme la suivante, est très schématique dans sa représentation d'un projecteur. Ce projecteur P comprend les quatre modules, M1,M2,M3 et M4, décrits plus haut, une ligne fermée délimitant chacun desdits modules pour plus de clarté.

En allumant M1 et M2, réciproquement M1 et M3, on obtient un code trafic à droite ou trafic à gauche. En allumant tous les modules, on obtient un faisceau de type route.

La figure 8 est une variante, où le projecteur côté droit PDest équipé différemment du projecteur côté gauche PG :
- le projecteur droit PD a un module M1 du même type que celui selon la figure 7. Il a également un module M2.
- le projecteur gauche PG a un module M1 (ou M1') associé à un module M3, tous les modules étant délimités par une ligne fermée comme à la figure 7. On a choici, avantageusement, des modules M2 et M3 qui sont d'aspect voisin voire identique à l'état éteint, de façon à ce que le style du véhicule de soit pas alteré : les modules M2 et M3 sont chacun constitués de la réunion de deux rangées de quatre points d'émission de lumière.

En allumant les deux modules M1 et le module M2, on a un code trafic à droite, en allumant les deux modules M1 et le module M3 on a un code trafic à gauche. On peut remplacer dans l'un des projecteurs le module M1 par un module M1', décrit plus haut, pour ajouter une fonction motorway.

Il est à noter que dans tous les modes de réalisation de l'invention, on peut piloter l'allumage et l'extinction des différents modules de plusieurs façons, en faisant fonctionner au moins deux, notamment au moins trois des modules optiques à la fois :
- on peut le faire en tout ou rien : chaque module est 100% allumé ou 100% éteint, ce qui a été décrit jusqu'à présent,
- on peut aussi moduler l'intensité lumineuse/ le flux lumineux du module : ainsi, au lieu d'éteindre totalement le module, on peut en abaisser l'intensité/le flux lumineux, par exemple en diminuant la tension ou l'intensité électrique d'alimentation de la ou des sources lumineuses du module en question, ou en n'éteignant pas la totalité des LEDs du module. On peut ainsi se permettre de garder un peu de lumière au dessus de la coupure recherchée tant que le faisceau reste globalement réglementaire.

Il est également dans le cadre de l'invention de ne faire fonctionner qu'un seul des modules optiques, quand certaines conditions le permettent : ainsi, on peut n'allumer que le module émettant un faisceau à coupure plate, en éclairage ville par exemple, ou que le module émettant un faisceau à coupure oblique, ceci afin de faire des économies d'énergie.

## Revendications

1. Dispositif d'éclairage pour véhicule automobile comportant une pluralité de modules optiques comportant chacun au moins une source lumineuse (S), ledit dispositif étant apte à émettre au moins deux faisceaux à coupures différentes, **caractérisé en ce que** ledit dispositif comprend :
- un premier module optique (M1) apte à générer un premier faisceau (F1) à coupure sensiblement plate,
- un second module optique (M2) apte à générer un second faisceau à coupure (F2) au moins partiellement oblique,
- un troisième module optique (M3) apte à générer un troisième faisceau à coupure (F3) au moins sensiblement oblique et différente de la coupure du second faisceau (F2),
au moins un des faisceaux globaux (Fg) émis par ledit dispositif d'éclairage étant la superposition d'au moins deux desdits faisceaux (F1,F2,F3) émis par les modules optiques (M1,M2,M3) ;
et **en ce que** le second faisceau à coupure (F2) est sensiblement symétrique au troisième faisceau. à coupure (F3), notamment par rapport à un axe sensiblement vertical (YY').

2. Dispositif selon la revendication 1, **caractérisé en ce que** l'un des faisceaux globaux (Fg) émis par ledit dispositif d'éclairage est la superposition des trois faisceaux au moins (F1,F2,F3) émis par les premiers, second et troisième modules optiques (M1,M2,M3).

3. Dispositif selon l'une des revendications précédentes, **caractérisé en ce qu'**il comprend :
- un quatrième module optique (M4) apte à générer un quatrième faisceau (F4), de préférence central, participant à l'obtention d'un des faisceaux globaux (Fg) émis par ledit dispositif.

4. Dispositif selon la revendication précédente **caractérisé en ce qu'**un faisceau global (Fg1) est la superposition des premier (F1) et second (F2) faisceaux, respectivement des premier (F1) et troisième (F3) faisceaux, afin de constituer un faisceau de croisement pour trafic à droite, respectivement un faisceau de croisement pour trafic à gauche.

5. Dispositif selon la revendication 2, **caractérisé en ce qu'**un faisceau global est la superposition des premier, second, troisième et quatrième faisceaux (F1,F2,F3,F4), afin de constituer un faisceau de type faisceau de route.

6. Dispositif selon l'une des revendications précédentes, **caractérisé en ce que** l'un des modules optiques (M1,M2,M3,M4) au moins a une orientation de faisceau réglable selon au moins un axe, notamment par mouvement du module ou d'au moins un de ses composants.

7. Ensemble de dispositifs d'éclairage destiné à équiper la face avant d'un véhicule et comprenant un premier dispositif d'éclairage (P1) et un second dispositif d'éclairage (P2), ledit ensemble étant apte à émettre au moins un faisceau lumineux global résultant de la superposition des faisceaux lumineux émis par chacun des dispositifs d'éclairage, **caractérisé en ce que**
- le premier et le second dispositifs d'éclairage comprennent chacun:
- un premier module optique (M1, MI') apte à générer un premier faisceau (F1,F1')) à coupure sensiblement plate,
- le premier dispositif d'éclairage comprend :
- un second module optique (M2) apte à générer un second faisceau à coupure (F2) au moins partiellement oblique
- le second dispositif d'éclairage comprend :
- un troisième module optique (M3) apte à générer un troisième faisceau à coupure (F3) au moins sensiblement oblique et différente de la coupure du second faisceau (F2),
au moins un des faisceaux globaux (Fg) émis par ledit ensemble étant la superposition d'au moins deux faisceaux (F1,F1',F2,F3) émis par au moins deux des modules optiques (M1,M1',M2,M3) ;
**en ce que** le second faisceau à coupure (F2) est sensiblement symétrique au troisième faisceau à coupure (F3), notamment par rapport à un axe sensiblement vertical (XX').

8. Ensemble de dispositifs d'éclairage selon la revendication 7, **caractérisé en ce que** le premier et/ou le second dispositifs d'éclairage comprennent :
- un quatrième module optique (M4) apte à générer un quatrième faisceau (F4) central participant à l'obtention d'un des faisceaux globaux (Fg) émis par ledit ensemble.

9. Ensemble de dispositifs d'éclairage selon l'une des revendications 7 à 8, **caractérisé en ce qu'**au moins un des faisceaux globaux (Fg) émis par ledit ensemble est la superposition d'au moins trois desdits faisceaux (F1,F1',F2,F3) émis par au moins trois des modules optiques (M1,M1',M2,M3), de préférence la superposition des faisceaux à coupures sensiblement plates (F1,F1') et de l'un des faisceaux à coupure (M2,M3), afin de constituer respectivement un faisceau de croisement de trafic à droite ou un faisceau de croisement de trafic à gauche.

10. Dispositif ou ensemble selon l'une des revendications précédentes, **caractérisé en ce qu'**au moins un des modules optiques (M1,M2,M3,M4) comporte une diode électroluminescente ou une pluralité de diodes électroluminescentes, ou au moins une lampe disposée dans un réflecteur.

11. Dispositif ou ensemble selon l'une des revendications précédentes, **caractérisé en ce qu'**au moins un des modules optiques (M1,M2,M3,M4) est équipé d'un écran d'occultation (E), mobile ou fixe, placé devant la ou les sources lumineuses (S).

12. Dispositif ou ensemble selon l'une des revendications précédentes, **caractérisé en ce que** le premier module optique (M1,MI') est apte à générer le premier faisceau (F1,F1') à coupure sensiblement plate, et également un autre faisceau (F12,F12') sans coupure.

13. Dispositif ou ensemble selon l'une des revendications précédentes, **caractérisé en ce que** le premier module optique (M1) est apte à générer plusieurs faisceaux (F1, F11) à coupure sensiblement plate à des hauteurs différentes.

14. Dispositif ou ensemble selon l'une des revendications précédentes, **caractérisé en ce que** la hauteur du faisceau émis par le premier module optique (M1) est réglable.

15. Dispositif ou ensemble selon la revendication précédente, **caractérisé en ce que** le premier module optique (M1) émet l'un ou l'autre des faisceaux (F1, F11) par mouvement de tout ou partie dudit module.

16. Dispositif ou ensemble selon l'une des revendications précédentes, **caractérisé en ce que** le premier module (M1) est apte à émettre un faisceau (F1) à coupure plate pour une fonction de type antibrouillard ou townlight, et **en ce qu'**il est apte à émettre un second faisceau (F11) à coupure plate à une hauteur différente, pour une fonction du type motorway.

17. Dispositif ou ensemble selon l'une des revendications précédentes, **caractérisé en ce que** l'orientation des faisceaux émis par le second et/ou le troisième module optique (M2,M3) est réglable, notamment selon un axe vertical (ZZ).

18. Procédé de mise en oeuvre du dispositif ou ensemble selon l'une des revendications précédentes, **caractérisé en ce qu'**on fait fonctionner au moins deux, notamment au moins trois des modules optiques, soit en tout ou rien, soit en modulant l'intensité lumineuse/le flux lumineux généré par chacun des modules (M1,M1',M2,M3,M4).

## Patentansprüche

1. Beleuchtungsvorrichtung für Kraftfahrzeuge mit einer Vielzahl von Optikmodulen, die jeweils wenigstens eine Lichtquelle (S) umfassen, wobei die Vorrichtung wenigstens zwei Lichtbündel mit unterschiedlichen Hell-Dunkel-Grenzen auszusenden vermag,
**dadurch gekennzeichnet, dass** die Vorrichtung umfasst:
- ein erstes Optikmodul (M1), das ein erstes Lichtbündel (F1) mit einer im Wesentlicher ebenen Hell-Dunkel-Grenze zu erzeugen vermag,
- ein zweites Optikmodul (M2), das ein zweites Lichtbündel (F2) mit einer wenigstens zum Teil schräg verlaufenden Hell-Dunkel-Grenze zu erzeugen vermag,
- ein drittes Optikmodul (M3), das ein drittes Lichtbündel (F3) mit einer wenigstens im Wesentlichen schräg verlaufenden und von der Hell-Dunkel-Grenze des zweiten Lichtbündels (F2) abweichenden Hell-Dunkel-Grenze zu erzeugen vermag,
wobei wenigstens eines der von der Beleuchtungsvorrichtung ausgesandten Gesamtlichtbündel (Fg) die Überlagerung wenigstens zweier der von den Optikmodulen (M1, M2, M3) emittierten Lichtbündel (F1, F2, F3) ist;
und dass das zweite Lichtbündel (F2) mit Hell-Dunkel-Grenze im Wesentlichen symmetrisch zu dem dritten Lichtbündel (F3) mit Hell-Dunkel-Grenze ist, insbesondere bezüglich einer im Wesentlichen vertikalen Achse (YY').

2. Vorrichtung nach Anspruch 1,
**dadurch gekennzeichnet, dass** eines der von der Beleuchtungsvorrichtung ausgesandten Gesamtlichtbündel (Fg) die Überlagerung der wenigstens drei vom ersten, zweiten und dritten Optikmodul (M1, M2, M3) emittierten Lichtbündel (F1, F2, F3) ist.

3. Vorrichtung nach einem der vorhergehenden Ansprüche,
**dadurch gekennzeichnet, dass** sie umfasst:
- ein viertes Optikmodul (M4), das ein viertes vorzugsweise mittiges Lichtbündel (F4) zu erzeugen vermag, das an der Bildung eines der von der Vorrichtung ausgesandten Gesamtlichtbündel (Fg) mitwirkt.

4. Vorrichtung nach dem vorhergehenden Anspruch,
**dadurch gekennzeichnet, dass** ein Gesamtlichtbündel (Fg1) die Überlagerung des ersten (F1) und des zweiten (F2) Lichtbündels, bzw. des ersten (F1) und des dritten (F3) Lichtbündels ist, um ein Abblendlichtbündel für Rechtsverkehr bzw. ein Abblendlichtbündel für Linksverkehr zu bilden.

5. Vorrichtung nach Anspruch 2,
**dadurch gekennzeichnet, dass** ein Gesamtlichtbündel die Überlagerung des ersten, des zweiten, des dritten und des vierten Lichtbündels (F1, F2, F3, F4) ist, um ein Fernlichtbündel zu bilden.

6. Vorrichtung nach einem der vorhergehenden Ansprüche,
**dadurch gekennzeichnet, dass** wenigstens eines der Optikmodule (M1, M2, M3, M4) eine Lichtbündelausrichtung aufweist, die entlang wenigstens einer Achse insbesondere durch Verstellen des Moduls oder wenigstens eines seiner Bauteile veränderbar ist.

7. Beleuchtungsvorrichtungssatz zur Ausstattung der Frontseite eines Fahrzeugs, umfassend eine erste Beleuchtungsvorrichtung (P1) und eine zweite Beleuchtungsvorrichtung (P2), wobei der Satz wenigstens ein Gesamtlichtbündel auszusenden vermag, das aus der Überlagerung der von jeder der Beleuchtungsvorrichtungen emittierten Lichtbündel resultiert,
**dadurch gekennzeichnet, dass**
- die erste und die zweite Beleuchtungsvorrichtung jeweils umfassen:
- ein erstes Optikmodul (M1, M1'), das ein erstes Lichtbündel (F1, F1') mit einer im Wesentlichen ebenen Hell-Dunkel-Grenze zu erzeugen vermag,
- die erste Beleuchtungsvorrichtung umfasst:
- ein zweites Optikmodul (M2), das ein zweites Lichtbündel (F2) mit einer wenigstens zum Teil schräg verlaufenden Hell-Dunkel-Grenze zu erzeugen vermag,
- die zweite Beleuchtungsvorrichtung umfasst:
- ein drittes Optikmodul (M3), das ein drittes Lichtbündel (F3) mit einer wenigstens im Wesentlichen schräg verlaufenden und von der Hell-Dunkel-Grenze des zweiten Lichtbündels (F2) abweichenden Hell-Dunkel-Grenze zu erzeugen vermag,
wobei wenigstens eines der von dem Satz ausgesandten Gesamtlichtbündel (Fg) die Überlagerung von wenigstens zwei Lichtbündeln (F1, F1', F2, F3) ist, die von wenigstens zwei der Optikmodule (M1, M1', M2, M3) ausgesandt werden;
dass das zweite Lichtbündel (F2) mit Hell-Dunkel-Grenze im Wesentlichen symmetrisch zu dem dritten Lichtbündel (F3) mit Hell-Dunkel-Grenze ist, insbesondere bezüglich einer im Wesentlichen vertikalen Achse (XX').

8. Beleuchtungsvorrichtungseinheit nach Anspruch 7,
**dadurch gekennzeichnet, dass** die erste und/oder die zweite Beleuchtungsvorrichtung umfassen:
- ein viertes Optikmodul (M4), das ein viertes mittiges Lichtbündel (F4) zu erzeugen vermag, das an der Bildung eines der von der Einheit ausgesandten Gesamtlichtbündel (Fg) mitwirkt.

9. Beleuchtungsvorrichtungseinheit nach einem der Ansprüche 7 bis 8,
**dadurch gekennzeichnet, dass** wenigstens eines der von dem Satz ausgesandten Gesamtlichtbündel (Fg) die Überlagerung der wenigstens drei Lichtbündel (F1, F1', F2, F3) ist, die von wenigstens drei der Optikmodule (M1, M1', M2, M3) emittiert werden, vorzugsweise die Überlagerung der Lichtbündel (F1, F1') mit im Wesentlichen ebenen Hell-Dunkel-Grenzen und eines der Lichtbündel (M2, M3) mit Hell-Dunkel-Grenze, um ein Abblendlichtbündel für Rechtsverkehr bzw. ein Abblendlichtbündel für Linksverkehr zu bilden.

10. Vorrichtung oder Satz nach einem der vorhergehenden Ansprüche,
**dadurch gekennzeichnet, dass** wenigstens eines der Optikmodule (M1, M2, M3, M4) eine Leuchtdiode oder eine Vielzahl von Leuchtdioden oder wenigstens eine in einem Reflektor angeordnete Lampe umfasst.

11. Vorrichtung oder Satz nach einem der vorhergehenden Ansprüche,
**dadurch gekennzeichnet, dass** wenigstens eines der Optikmodule (M1, M2, M3, M4) mit einer beweglichen oder feststehenden Abschatterblende (E) versehen ist, die vor der bzw. den Lichtquellen (S) angeordnet ist.

12. Vorrichtung oder Satz nach einem der vorhergehenden Ansprüche,
**dadurch gekennzeichnet, dass** das erste Optikmodul (M1, M1') das erste Lichtbündel (F1, F1') mit einer im Wesentlichen ebenen Hell-Dunkel-Grenze und gleichfalls ein anderes Lichtbündel (F12, F12') ohne Hell-Dunkel-Grenze zu erzeugen vermag.

13. Vorrichtung oder Satz nach einem der vorhergehenden Ansprüche,
**dadurch gekennzeichnet, dass** das erste Optikmodul (M1) mehrere Lichtbündel (F1, F11) mit im Wesentlichen ebener Hell-Dunkel-Grenze in unterschiedlichen Höhen zu erzeugen vermag.

14. Vorrichtung oder Satz nach einem der vorhergehenden Ansprüche,
**dadurch gekennzeichnet, dass** die Höhe des vom ersten Optikmodul (M1) ausgesandten Lichtbündels veränderbar ist.

15. Vorrichtung oder Satz nach dem vorhergehenden Anspruch,
**dadurch gekennzeichnet, dass** das erste Optikmodul (M1) das eine oder das andere Lichtbündel (F1, F11) durch Verstellen des gesamten Moduls oder Teilen davon aussendet.

16. Vorrichtung oder Satz nach einem der vorhergehenden Ansprüche,
**dadurch gekennzeichnet, dass** das erste Modul (M1) ein Lichtbündel (F1) mit ebener Hell-Dunkel-Grenze für Nebellicht oder Stadtlicht auszusenden vermag, und dass es ein zweites Lichtbündel (F11) mit ebener Hell-Dunkel-Grenze in einer anderen Höhe für Autobahnlicht auszusenden vermag.

17. Vorrichtung oder Satz nach einem der vorhergehenden Ansprüche,
**dadurch gekennzeichnet, dass** die Ausrichtung des vom zweiten und/oder dritten Optikmodul (M2, M3) ausgesandten Lichtbündels insbesondere entlang einer vertikalen Achse (ZZ) veränderbar ist.

18. Verfahren zum Betreiben der Vorrichtung oder des Satzes nach einem der vorhergehenden Ansprüche,
**dadurch gekennzeichnet, dass** wenigstens zwei, insbesondere wenigstens drei Optikmodule entweder in zwei Stellungen oder durch Verändern der Lichtintensität/des von jedem der Module (M1, M1', M2, M3, M4) erzeugten Lichtstroms betrieben werden.

## Claims

1. Lighting device for a motor vehicle comprising a plurality of optical modules each including at least one light source (S), said device being capable of emitting at least two beams with different cutoffs, **characterised in that** the said device comprises:
- a first optical module (M1) capable of generating a first beam (F1) with substantially flat cutoff,
- a second optical module (M2) capable of generating a second beam (F2) with at least partially oblique cutoff,
- a third optical module (M3) capable of generating a third beam (F3) with at least substantially oblique cutoff and different from the cutoff of the second beam (F2),
at least one of the global beams (Fg) emitted by said lighting device being the superimposition of at least two of said beams (F1 ,F2, F3) emitted by the optical modules (M1, M2, M3);
and **in that** the second cutoff beam (F2) is substantially symmetrical with the third cutoff beam (F3), in particular relative to a substantially vertical axis (YY').

2. Device according to claim 1, **characterised in that** one of the global beams (Fg) emitted by said lighting device is the superimposition of at least three beams (F1, F2, F3) emitted by the first, second and third optical modules (M1, M2, M3).

3. Device according to one of the preceding claims, **characterised in that** it comprises:
- a fourth optical module (M4) capable of generating a fourth beam (F4), preferably central, participating in the obtaining of one of the global beams (Fg) emitted by said device.

4. Device according to the preceding claim, **characterised in that** a global beam (Fg1) is the superimposition of the first (F1) and second (F2) beams, respectively of the first (F1) and third (F3) beams, so as to constitute a dipped beam for traffic on the right, respectively a dipped beam for traffic on the left.

5. Device according to claim 2, **characterised in that** a global beam is the superimposition of the first, second, third and fourth beams (F1, F2, F3, F4), so as to constitute a beam of the high beam type.

6. Device according to one of the preceding claims, **characterised in that** at least one of the optical modules (M1, M2, M3, M4) has a beam orientation adjustable on at least one axis, in particular by movement of the module or at least one of its components.

7. Assembly of lighting devices designed to equip the front face of a vehicle and comprising a first lighting device (P1) and a second lighting device (P2), said assembly being capable of emitting at least one global light beam resulting from the superimposition of the light beams emitted by each of the lighting devices, **characterised in that**
- the first and the second lighting devices each comprise:
- a first optical module (M1, M1') capable of generating a first beam (F1, F1') with substantially flat cutoff,
- the first lighting device comprises:
- a second optical module (M2) capable of generating a second beam (F2) with at least partially oblique cutoff,
- the second lighting device comprises:
- a third optical module (M3) capable of generating a third beam (F3) with at least substantially oblique cutoff and different from the cutoff of the second beam (F2),
at least one of the global beams (Fg) emitted by said assembly being the superimposition of at least two beams (F1, F1', F2, F3) emitted by at least two of the optical modules (M1, M1', M2, M3);
**in that** the second cutoff beam (F2) is substantially symmetrical with the third cutoff beam (F3), in particular relative to a substantially vertical axis (XX').

8. Assembly of lighting devices according to claim 7, **characterised in that** the first and/or the second lighting devices comprise:
- a fourth optical module (M4) capable of generating a central fourth beam (F4) participating in the obtaining of one of the global beams (Fg) emitted by said assembly.

9. Assembly of lighting devices according to one of claims 7 to 8, **characterised in that** at least one of the global beams (Fg) emitted by said assembly is the superimposition of at least three of said beams (F1, F1', F2, F3) emitted by at least three of the optical modules (M1, M1', M2, M3), preferably the superimposition of the beams with substantially flat cutoff (F1, F1') and of one of the cutoff beams (M2, M3), so as to constitute respectively a dipped beam for traffic on the right or a dipped beam for traffic on the left.

10. Device or assembly according to one of the preceding claims, **characterised in that** at least one of the optical modules (M1, M2, M3, M4) comprises a light-emitting diode or a plurality of light-emitting diodes, or at least one lamp disposed in a reflector.

11. Device or assembly according to one of the preceding claims, **characterised in that** at least one of the optical modules (M1, M2, M3, M4) is equipped with an occultation screen (E), mobile or fixed, placed in front of the light source or sources (S).

12. Device or assembly according to one of the preceding claims, **characterised in that** the first optical module (M1, M1') is capable of generating the first beam (F1, F1') with substantially flat cutoff, and also another beam (F12, F12') without cutoff.

13. Device or assembly according to one of the preceding claims, **characterised in that** the first optical module (M1) is capable of generating several beams (F1, F11) with substantially flat cutoff at different heights.

14. Device or assembly according to one of the preceding claims, **characterised in that** the height of the beam emitted by the first optical module (M1) is adjustable.

15. Device or assembly according to the preceding claim, **characterised in that** the first optical module (M1) emits one or other of the beams (F1, F11) by movement of all or part of said module.

16. Device or assembly according to one of the preceding claims, **characterised in that** the first module (M1) is capable of emitting a beam (F1) with flat cutoff for a function of the anti-fog or townlight type, and **in that** it is capable of emitting a second beam (F11) with flat cutoff at a different height, for a function of the motorway type.

17. Device or assembly according to one of the preceding claims, **characterised in that** the orientation of the beams emitted by the second and/or the third optical module (M2, M3) is adjustable, in particular on a vertical axis (ZZ).

18. Method for implementing the device or assembly according to one of the preceding claims, **characterised in that** at least two, in particular at least three of the optical modules are made to operate either in on/off mode or by modulating the luminous intensity/light flux generated by each of the modules (M1, M1', M2, M3, M4).
